# EUROPÄISCHE PATENTANMELDUNG

(11) **EP 2 498 491 A1**
(43) Veröffentlichungstag der Anmeldung: **12.09.2012**
(21) Anmeldenummer: 12450010.9
(22) Anmeldetag: 16.02.2012
(51) Int. Cl.: H04N 7/15, G09B 5/06, H04L 12/18, H04L 29/06

(54) **Verfahren und Vorrichtung zur audio- und videobasierten Echtzeit-Kommunikation**

(30) Priorität: 08.03.2011 AT 3122011
(71) Anmelder: VisoCon GmbH, 8010 Graz (AT)
(72) Erfinder: Kröpfl, Andreas, 8044 Graz (AT)
(74) Vertreter: Haffner und Keschmann Patentanwälte KG

(57) **Zusammenfassung**

Verfahren und Vorrichtung zur audio- und videobasierten Kommunikation zwischen wenigstens einem Master-Teilnehmer und einer Vielzahl von Gruppenteilnehmern, wobei ein Server-Rechner bei einer entsprechenden Anfrage zwischen einem ersten und einem zweiten Betriebsmodus wechselt, wobei
- im ersten Betriebsmodus dem Streaming-Server die von einer Master-Kommunikationseinheit aufgenommenen Inhalte zugeführt sind, der Streaming-Server die ihm zugeführten Inhalte in Echtzeit über wenigstens einen Kanal der Datenverbindung an die Gruppenteilnehmer streamt, sodass lediglich eine unidirektionale Kommunikation stattfindet,
- im zweiten Betriebsmodus der Master-Teilnehmer einen Rückkanal von einem anfragenden oder ausgewählten Gruppenteilnehmer zum Server-Rechner freigibt, sodass die von der beim anfragenden oder ausgewählten Gruppenteilnehmer angeordneten Teilnehmer-Kommunikationseinheit aufgenommenen Inhalte als Video- und Audiodaten über wenigstens einen Kanal an den Server-Rechner in Echtzeit gestreamt und dem Streaming-Server zugeführt werden und den. Streaming-Server die ihm zugeführten Audio- und Videodaten in Echtzeit über wenigstens einen Kanal der Datenverbindung an die übrigen Gruppenteilnehmer und den Master-Teilnehmer streamt, oder die Audio- bzw. Videostreams des anfragenden oder ausgewählten Gruppenteilnehmers mit denen des Master-Teilnehmers additiv mischt und diesen Gesamt-Stream an alle Gruppenteilnehmer streamt.

## Beschreibung

Die Erfindung betrifft ein Verfahren, einen Server-Rechner und eine Vorrichtung zur audio- und videobasierten Echtzeit-Kommunikation zwischen wenigstens einem Master-Teilnehmer und einer Vielzahl von Gruppenteilnehmern.

Audio- und videobasierte Echtzeit-Kommunikation ist beispielsweise im Rahmen von Video-Konferenzen zwischen entfernten Teilnehmern erforderlich. Weiters wird audio- und videobasierte Echtzeit-Kommunikation auch bei sogenannten e-learning Anwendungen und bei Web-Seminaren eingesetzt, wo der Vortrag eines Vortagenden über ein Computernetzwerk, z.B. das Internet, an eine Vielzahl von Teilnehmern übermittelt wird. Zur Übermittlung von Audio- und Videoinhalten über Computernetzwerke werden derzeit verschiedene technische Verfahren verwendet.

Während klassische Broadcasting-Angebote (Rundfunk, Radio usw.) eine möglichst große Reichweite erreichen, werden Streaming-Media-Angebote mit wachsender Teilnehmerzahl teurer, denn die Daten müssen an jeden Empfänger einzeln versandt werden. In der Netzwerktechnik ist zwar der Multicast-Modus bekannt, bei dem ein vom Streaming-Server ausgehender Datenstrom bei geringer Netzbelastung gleichzeitig an verschiedene Empfänger gesendet werden kann; dieser wird jedoch bis heute praktisch nicht benutzt, weil ihn viele Router im Internet nicht unterstützen. Stattdessen wird Streaming für jeden Benutzer gesondert auf dessen Anforderung hin als Punkt-zu-Punkt-Verbindung zwischen dem Medienserver des Senders und dem Rechner des Benutzers realisiert. Da Streaming insbesondere in der Echtzeitübertragung vorteilhaft ist und diese Übertragung nicht in jedem Fall ebenso für die dauerhafte Speicherung konzipiert wird, kann die Qualität oftmals eher niedrig ausfallen, um bei den heute üblichen Datenübertragungsraten eine flüssige Übertragung zu gewährleisten. Nachteilig beim Streaming ist dass hierdurch lediglich eine unidirektionale Kommunikation stattfindet, nämlich vom Streaming-Server zum Empfänger.

Das unidirektionale Streaming ist für Videokonferenzen und andere Anwendungen, bei denen eine bidirektionale Kommunikation erforderlich ist, nicht geeignet. Bidirektionale Kommunikation ist beispielsweise auch bei e-learning Anwendungen erforderlich, wenn es Studenten ermöglicht werden soll, während des Vortrages Fragen zu stellen.

Für die bidirektionale Kommunikation zwischen mehr als zwei Teilnehmern ist bei herkömmlichen Lösungen in der Regel wenigstens eine Multipoint Control Unit (MCU) erforderlich. Es handelt sich um Hard- und/oder Softwarelösungen, die eine oder mehrere Mehrpunktkonferenzen verwalten und steuern. Die MCU ist mit allen Teilnehmern verbunden und verwaltet und regelt die ein- und ausgehenden Video- und Audiodatenströme. Die Verwaltung der ein- und ausgehenden Video- und Audiodatenströme ist jedoch sehr aufwändig und rechenintensiv, sodass die Teilnehmerzahl bei solchen Systemen begrenzt ist. Zur Erleichterung der Verwaltung von Videokonferenzen kann einem der Teilnehmer die Rolle eines Moderators (Master-Teilnehmer) zugewiesen werden.

Die vorliegende Erfindung zielt daher darauf ab, ein System zur audio- und videobasierten Echtzeit-Kommunikation zwischen wenigstens einem Master-Teilnehmer und einer Vielzahl von Gruppenteilnehmern zu schaffen, bei dem die Anzahl der Teilnehmer nahezu unbegrenzt ist, wobei gleichzeitig die Möglichkeit der bidirektionalen Kommunikation gegeben sein soll.

Zur Lösung dieser Aufgabe sieht die vorliegende Erfindung gemäß einem ersten Aspekt ein Verfahren vor, bei dem
- zwischen einer beim Master-Teilnehmer angeordneten Master-Kommunikationseinheit und einem Server-Rechner eine Datenverbindung aufgebaut wird, über welche die von der Master-Kommunikationseinheit aufgenommenen Inhalte über wenigstens einen Kanal als Video- und Audiodaten an den Server-Rechner in Echtzeit gestreamt werden,
- am Server-Rechner ein Streaming-Server betrieben wird,
- zwischen den bei den Gruppenteilnehmern angeordneten Teilnehmer-Kommunikationseinheiten und dem Server-Rechner jeweils eine Datenverbindung aufgebaut wird,
wobei der Server-Rechner bei einer entsprechenden Anfrage zwischen einem ersten und einem zweiten Betriebsmodus wechselt, wobei
- im ersten Betriebsmodus dem Streaming-Server die von der Master-Kommunikationseinheit aufgenommenen Inhalte zugeführt sind, der Streaming-Server die ihm zugeführten Inhalte in Echtzeit über wenigstens einen Kanal der Datenverbindung an die Gruppenteilnehmer streamt, sodass lediglich eine unidirektionale Kommunikation stattfindet,
- im zweiten Betriebsmodus der Master-Teilnehmer einen Rückkanal von einem anfragenden oder ausgewählten Gruppenteilnehmer zum Server-Rechner freigibt, sodass die von der beim anfragenden oder ausgewählten Gruppenteilnehmer angeordneten Teilnehmer-Kommunikationseinheit aufgenommene Inhalte als Video- und Audiodaten über wenigstens einen Kanal an den Server-Rechner in Echtzeit gestreamt und dem Streaming-Server zugeführt werden und der Streaming-Server die ihm zugeführten Audio- und Videodaten in Echtzeit über wenigstens einen Kanal der Datenverbindung an die übrigen Gruppenteilnehmer und den Master-Teilnehmer streamt.

Dadurch, dass zwischen dem ersten und dem zweiten Betriebsmodus gewechselt werden kann, ergibt sich für den Master-Teilnehmer die Möglichkeit, einem einzelnen Gruppenteilnehmer das Wort zu erteilen, der nun an dessen Stelle zu allen übrigen Gruppenteilnehmer gestreamt wird. Im ersten Betriebsmodus wird lediglich der Master-Teilnehmer an alle Gruppenteilnehmer gestreamt. Nachdem der Master-Teilnehmer einem Gruppenteilnehmer das Wort erteilt hat, wird im zweiten Betriebsmodus der Gruppenteilnehmer an alle übrigen Gruppenteilnehmer und an den Master-Teilnehmer gestreamt. Dabei ist jedes Mal eine unidirektionale 1:N Streaming-Verbindung realisiert, sodass eine große Anzahl an Teilnehmern erreicht werden kann. Auf Grund der Möglichkeit einem beliebigen Gruppenteilnehmer das Wort zu erteilen, ist insgesamt, aber ohne großen rechnerischen und apparativen Aufwand, eine bidirektionale Kommunikation möglich. Im zweiten Betriebsmodus kann der Master-Teilnehmer dem Gruppenteilnehmer das Wort wieder entziehen und so wieder zum ersten Betriebsmodus zurückkehren. Diese Art der Kontrolle ist insbesondere für Vortragsveranstaltungen im Rahmen von e-learning oder Web-Seminaren vorteilhaft.

Anders als bei herkömmlichen Konferenzsystemen muss der jeweilige Stream im Rahmen der Erfindung vom Server-Rechner nicht aufwendig bearbeitet werden. Vielmehr reicht es aus, wenn der vom Server-Rechner empfangene Stream vom Streaming-Server unverändert zu den Empfängern gestreamt wird. Dadurch kann der Rechenaufwand erheblich gesenkt werden.

Während der das Wort übernehmende Gruppenteilnehmer an alle übrigen Teilnehmer gestreamt wird, muss der übernehmende Gruppenteilnehmer selbst keinen Stream empfangen. Die Kommunikation kann jedoch bevorzugt angenehmer gestaltet werden, wenn dem übernehmenden Gruppenteilnehmer das Bild und ggf. der Ton des Master-Teilnehmers zugestreamt wird, sodass der Gruppenteilnehmer die entsprechende Reaktion des Master-Teilnehmers beobachten kann. Die Erfindung ist zu diesem Zweck derart weitergebildet, dass dem Streaming-Server im zweiten Betriebsmodus zusätzlich die von der Master-Kommunikationseinheit aufgenommenen Inhalte in Echtzeit zugeführt werden und der Streaming-Server die von der Master-Kommunikationseinheit zugeführten Inhalte in Echtzeit über wenigstens einen weiteren Kanal an den anfragenden oder ausgewählten Gruppenteilnehmer streamt.

Alternativ kann dem das Wort übernehmenden Gruppenteilnehmer und auch allen übrigen Gruppenteilnehmern aber zusätzlich das Bild und ggf. der Ton des Master-Teilnehmers zugestreamt werden. In diesem Fall ist eine Verarbeitung der Streams durch den Server erforderlich, damit beide Streams, d.h. der Stream des Master-Teilnehmers und der Stream des das Wort übernehmenden Gruppenteilnehmers zu einem einzigen Stream vereinigt werden, wobei das bei den Empfängern empfangene Videobild geteilt ist und beispielsweise in der rechten Bildhälfte das Bild des Master-Teilnehmers und in der linken Bildhälfte das Bild des das Wort übernehmenden Gruppenteilnehmers enthält. Die Erfindung ist zu diesem Zweck bevorzugt derart weitergebildet, dass im zweiten Betriebsmodus die von dem anfragenden oder ausgewählten Gruppenteilnehmer an den Server-Rechner übermittelten Audio- und Videodaten im Server-Rechner decodiert werden, dass zusätzlich von der Master-Kommunikationseinheit aufgenommene Video- und Audioinhalte an den Server-Rechner gestreamt werden und dort decodiert werden, dass aus den beiden decodierten Streams im Server-Rechner in Echtzeit ein zusammengesetzter Stream erzeugt wird und dass der zusammengesetzte Stream codiert und an die Teilnehmer-Kommunikationseinheiten gestreamt wird.

Anzumerken ist, dass der Begriff "Kommunikationseinheit" jede Zusammenstellung von Bild- und Tonaufnahme und -wiedergabeeinheiten umfasst. Insbesondere ist es vorstellbar, dass die Bild- und Tonaufnahmeeinheit und die Bild- und Tonwiedergabeeinheit als gesonderte bauliche Einheiten ausgebildet sind, z.B. als Videokamera und als Anzeigevorrichtung mit Lautsprechern. Weiters ist vorstellbar, dass die genannten Einheiten in eine Rechnereinheit, z.B. einen Arbeitsplatz-PC, integriert sind oder aber als gesonderte Einheiten ausgebildet sind, z.B. als externe Videokamera. Wenn die Bild- und Tonaufnahme oder -wiedergabeeinheit als externe Vorrichtung ausgebildet ist, erfolgt die Verbindung mit dem Server-Rechner über wenigstens eine zum Aufbau einer Datenverbindung mit dem Server-Rechner geeignete Zwischeneinheit, wie z.B. eine Rechnereinheit, eine Schnittstelleneinheit oder dgl.

Wenn im Rahmen der Erfindung davon gesprochen wird, dass Daten über einen "Kanal" übertragen werden, ist hierbei nicht das physische Übertragungsmittel zu verstehen, sondern dies bezeichnet eine sich aus der Verwendung des jeweiligen Übertragungs- oder Streamingprotokolls ergebende Datenstromstruktur, die vom Empfänger von anderen Kanälen gesondert empfangen und der entsprechende Inhalt in der Folge gesondert angezeigt werden kann. Es ist somit lediglich die logische Aufteilung der zu übertragenden Gesamtdaten in einzelne Kanäle gemeint. Wesentlich ist, dass der über einen ersten Kanal gestreamte Inhalt auf einer Anzeigevorrichtung getrennt von dem über einen zweiten Kanal gestreamten Inhalt dargestellt werden kann, z.B. in verschiedenen Fenstern einer graphischen Benutzeroberfläche eines Rechners. Bei einer derartigen Übertragung über mehrere Kanäle kann jeder Stream entsprechend den jeweiligen Anforderungen dynamisch vor und während der Übertragung angepasst werden, z.B. hinsichtlich der Bildauflösung, der Bildwiederholrate und dgl., um die zur Verfügung stehende Bandbreite optimal ausnützen zu können. Insbesondere kann die Bildwiederholrate und/oder die Bildgröße (Pixelanzahl) des über den einen Kanal übermittelten Videostreams von den entsprechenden Werten des über den anderen Kanal übermittelten Videostreams verschieden gewählt sein.

Eine bevorzugte Weiterbildung der Erfindung sieht in diesem Zusammenhang vor, dass bei der Master-Kommunikationseinheit und ggf. den Teilnehmer-Kommunikationseinheiten zwei Videokameras eingesetzt werden, deren Inhalte über voneinander gesonderte Kanäle an den Server-Rechner übertragen und vom Streaming-Server über voneinander gesonderte Kanäle gestreamt werden. So kann über die eine Kamera das Bild des Vortragenden, d.h. des Master-Teilnehmers oder eines Gruppenteilnehmers, aufgenommen und gestreamt werden, wobei in der Regel lediglich das Gesicht der entsprechenden Person erfasst wird. Die andere Kamera kann dazu dienen, ein den Vortrag unterstützendes Präsentationsmedium, insbesondere ein visuelles Hilfsmittel aufzunehmen und zu streamen. Bei dem Präsentationsmedium kann es sich um eine Tafel, ein Whiteboard, ein Dokument, Handschrift auf einem Papier oder einen Demosaal handeln. Wenn es sich bei dem Präsentationsmedium um ein elektronisches Medium handelt, wie z.B. eine Bildschirmpräsentation, eine elektronische Diashow, elektronische Fotos oder dgl. kann der entsprechende Inhalt vom jeweiligen Rechner direkt gestreamt werden ohne dass eine Kamera notwendig wäre. Eine optimale Anpassung der aus den zwei Kameras bzw. Videos generierten Streams kann hinsichtlich einer bestmöglichen Ausnutzung der Bandbreite derart erfolgen, dass die Bildwiederholrate des den Vortragenden zeigenden Streams höher gewählt wird, um ein flüssiges Bild zu erhalten, während die Bildwiederholrate des das Präsentationsmedium zeigenden Streams niedriger gewählt ist, da ein flüssiger Bildablauf hier weniger von Bedeutung ist, und dabei aber umso mehr eine höhere Auflösung für die Übertragung von Dokumenten vorteilhaft ist. Durch die Reduktion der Bildwiederholfrequenz kann dabei die verfügbare Bandbreite optimiert genützt werden. Ebenso kann für die einzelnen Streams eine unterschiedliche Auflösung bzw. Bildgröße gewählt werden. Zur Reduzierung der erforderlichen Übertragungsbandbreite kann die Bildgröße des den vortragenden zeigenden Streams beispielsweise geringer gewählt werden als die Bildgröße des das Präsentationsmedium zeigenden Streams.

Als "Streaming-Server" ist im Rahmen der Erfindung ein Server für die Auslieferung von Streaming Media-Daten über ein Netzwerk bezeichnet. Typische Streaming-Server unterstützen spezielle Streaming-Protokolle wie RTI und RTCP. Der Begriff "Server" bezeichnet hierbei in erster Linie eine Software im Rahmen eines Client-Server-Modells, die auf dem Server-Rechner läuft und die für das Streaming erforderlichen Dienste zur Verfügung stellt. Für das Streaming werden die Video- und ggf. Audiodaten in der Regel codiert, wobei gängige Video-Codecs zur Verfügung stehen, wie z.B. VP8, H264, sowie Signalisierungsprotokolle wie z.B. SIP.

Wie bereits erwähnt erfolgt das Wechseln vom ersten Betriebsmodus in den zweiten Betriebsmodus im Rahmen der Erfindung bevorzugt auf Anfrage eines Gruppenteilnehmers an den Master-Teilnehmer. Der Anfragevorgang kann dabei bevorzugt derart ablaufen, dass die Anfrage eines Gruppenteilnehmers an den Master-Teilnehmer das Versenden einer Anfragemitteilung vom anfragenden Gruppen-Teilnehmer über den Server-Rechner an den Master-Teilnehmer umfasst, dass die Anfrage an der Master-Kommunikationseinheit dem Master-Teilnehmer signalisiert wird und dass bei Aktivieren eines Vorschau-Modus durch den Master-Teilnehmer die von der anfragenden Teilnehmer-Kommunikationseinheit aufgenommenen Video-Inhalte und ggf. Audio-Inhalte in Echtzeit an den Server-Rechner übermittelt und vom Streaming-Server in Echtzeit ausschließlich an die Master-Kommunikationseinheit gestreamt werden. Auf diese Weise kann sich der Master-Teilnehmer im Vorschaumodus einen Stream vom anfragenden Gruppenteilnehmer auf den Bildschirm holen und ggf. Nachrichten austauschen, bevor er ihm durch Wechsel in den zweiten Betriebsmodus das Wort übergibt.

Eine "Anfragemitteilung" bedeutet nicht notwendigerweise eine Textmitteilung, sondern umfasst vielmehr jede von der Master-Kommunikationseinheit als Anfrage erkennbare Bitfolge, die eine Signalisierung einer Anfrage an den Master-Teilnehmer bewirkt. Die Signalisierung kann z.B. dadurch erfolgen, dass ein Miniatur-Bild des anfragenden Gruppenteilnehmers an einer Anzeigevorrichtung der Master-Kommunikationseinheit angezeigt oder dass ein Blinksignal generiert und der Name des anfragenden Gruppenteilnehmers angezeigt wird.

Das Umschalten vom ersten in den zweiten Betriebsmodus kann vom Master-Teilnehmer alternativ auch durchgeführt werden, ohne dass ein Gruppenteilnehmer dies anfordert.

Bei einem Vortrag wie auch bei einer Videokonferenz ist es für den Vortragenden angenehm, die Reaktion und das Verhalten der Zuhörer beobachten zu können, um den eigenen Vortrag ggf. anpassen zu können. Gemäß einer bevorzugten Ausführung der Erfindung wird zu diesem Zweck derart vorgegangen, dass der Server-Rechner im ersten Betriebsmodus zusätzlich eine Mehrzahl von von den Teilnehmer-Kommunikationseinheiten aufgenommenen und übermittelten Video-Inhalten oder Fotos zu einem Mosaikbild zusammensetzt und der Streaming-Server das Mosaikbild an die Master-Kommunikationseinheit streamt, sodass das Mosaikbild auf der Anzeigevorrichtung der Master-Kommunikationseinheit angezeigt wird. Das Mosaikbild kann dabei derart zusammengesetzt sein, dass die Bilder der einzelnen Gruppenteilnehmer das Mosaikbild sequentiell durchlaufen, was insbesondere von Vorteil ist, wenn die Anzahl der Gruppenteilnehmer die Anzahl der im Mosaikbild darstellbaren Bilder überschreitet.

Eine weitere bevorzugte Ausführung der Erfindung sieht vor, dass die Herstellung einer Datenverbindung zwischen einer Teilnehmer-Kommunikationseinheit und dem Server-Rechner das Übermitteln einer Benutzerkennung des Gruppenteilnehmers an den Server-Rechner und das Authentifizieren des Gruppenteilnehmers umfasst.

Weiters ist bevorzugt vorgesehen, dass der Empfang des vom Streaming-Server ausgesendeten Streams durch Teilnehmer-Kommunikationseinheiten unterbrochen wird, die eine direkte Streaming-Verbindung zwischen sich herstellen.

Grundsätzlich ist anzumerken, dass der Begriff "Master-Teilnehmer" im Rahmen der Erfindung nicht notwendigerweise eine konkrete Person bezeichnet. Vielmehr wird hierbei nur die Funktion eines Teilnehmers als "Master" bzw. Moderator angesprochen. Die "Master"-Funktion kann von einem Teilnehmer zu einem anderen Teilnehmer übergeben werden, sodass dieser andere Teilnehmer die dem Master-Teilnehmer vorbehaltenen Rechte erhält, wie z.B. das Recht einem Gruppenteilnehmer das Wort zu erteilen und wieder zu entziehen.

Zur Lösung der der Erfindung zugrundeliegenden Aufgabe sieht die vorliegende Erfindung gemäß einem zweiten Aspekt eine Vorrichtung vor, umfassend einen Server-Rechner mit einem Streaming-Server, wobei der Server-Rechner wenigstens eine Schnittstelle zum Empfangen und/oder Senden eines Streams von bzw. zu einer Master-Kommunikationseinheit und wenigstens eine Schnittstelle zum Empfangen und/oder Senden eines Streams zu bzw. von einer Vielzahl von Teilnehmer-Kommunikationseinheiten umfasst, wobei der Server-Rechner Verarbeitungsmittel aufweist, um bei einer entsprechenden Anfrage zwischen einem ersten und einem zweiten Betriebsmodus zu wechseln, wobei
- im ersten Betriebsmodus der Streaming-Server die ihm von der Master-Kommunikationseinheit zugeführten Audio- und Videodaten in Echtzeit über wenigstens einen Kanal an die Gruppenteilnehmer streamt, sodass lediglich eine unidirektionale Kommunikation stattfindet,
- im zweiten Betriebsmodus der Master-Teilnehmer einen Rückkanal von einem anfragenden oder ausgewählten Gruppenteilnehmer zum Server-Rechner freigibt, sodass die von der beim anfragenden oder ausgewählten Gruppenteilnehmer angeordnete Teilnehmer-Kommunikationseinheit aufgenommenen und dem Server-Rechner über wenigstens einen Kanal als Audio- und Videodaten in Echtzeit übermittelten Inhalte dem Streaming-Server zugeführt werden und der Streaming-Server die ihm zugeführten Audio- und Videodaten in Echtzeit über wenigstens einen Kanal an die übrigen Gruppenteilnehmer und den Master-Teilnehmer streamt.

Bevorzugte Weiterbildungen des Server-Rechners ergeben sich aus den Unteransprüchen.

Die Erfindung wird nachfolgend anhand von in der Zeichnung schematisch dargestellten Ausführungsbeispielen näher erläutert. In dieser zeigen Fig.1 das Schema einer Echtzeitkommunikation in einem ersten Betriebsmodus des Server-Rechners, Fig.2 ein abgewandeltes Kommunikationsschema, Fig.3 ein Kommunikationsschema in einem Vorschaumodus des Server-Rechners, Fig.4 ein Kommunikationsschema im zweiten Betriebsmodus des Server-Rechners, Fig.5 ein Kommunikationsschema in einem weiteren Betriebsmodus des Server-Rechners, Fig.6 ein alternatives Kommunikationsschema im zweiten Betriebsmodus, Fig.7 ein abgewandeltes Kommunikationsschema im ersten Betriebsmodus des Server-Rechners und Fig.8 ein weiteres alternatives Kommunikationsschema im ersten Betriebsmodus des Server-Rechners.

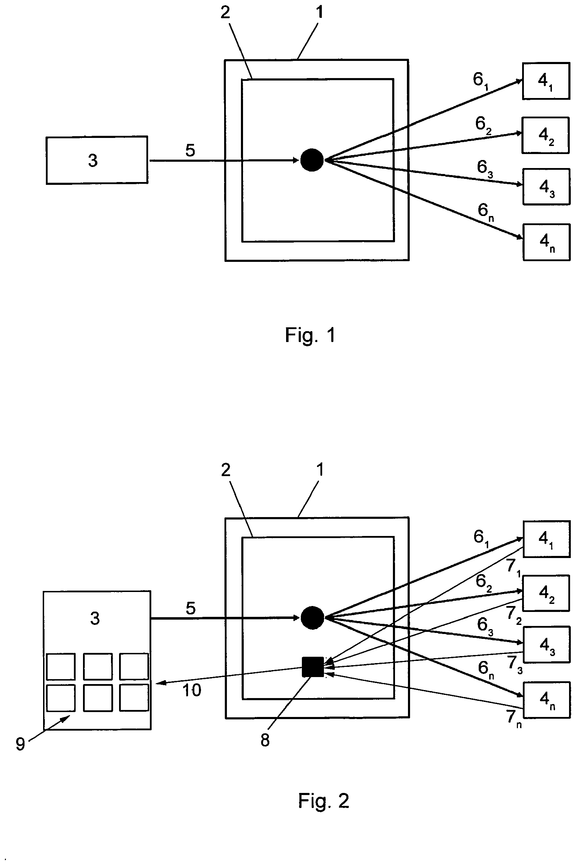

In Fig.1 ist ein Server-Rechner mit 1 bezeichnet, auf dem ein virtueller Konferenzraum 2 mit einem Streaming-Server eingerichtet ist. Der Server-Rechner 1 ist über herkömmliche Datenverbindungen mit einer Master-Kommunikationseinheit 3 und einer Mehrzahl von Teilnehmer-Kommunikationseinheiten 4₁, 4₂, 4₃ bis 4ₙ verbunden. Bei den Kommunikationseinheiten 3 bzw. 4₁..ₙ handelt es sich bspw. um herkömmliche Arbeitsplatz-PCs, Smartphones mit Internetverbindung oder TV Set Top Boxen (embedded Systeme), die mit einer Video- und Audioaufnahme- sowie -wiedergabeeinheit ausgestattet sind. In dem in Fig.1 dargestellten ersten Betriebsmodus (Master-Streaming-Mode) werden die von der Master-Kommunikationseinheit 3 aufgenommenen Video- und Audioinhalte dem Streaming-Server 2 zugeführt, der den Datenstrom über eine Mehrzahl von Punkt-zu-Punkt Verbindungen an die Teilnehmer-Kommunikationseinheiten 4_{1··n} streamt. Auf diese Art und Weise erhalten die Teilnehmer-Kommunikationseinheiten 4_{1··n} die von der Master-Kommunikationseinheit 3 aufgenommenen Video- und ggf. Audioinhalte in Echtzeit übermittelt. So kann eine Mehrzahl von jeweils über eine Teilnehmer-Kommunikationseinheit 4_{1··n} verfügenden Gruppenteilnehmern dem Vortrag eines Master-Teilnehmers, dem die Master-Kommunikationseinheit 3 zugeordnet ist, folgen. Wie durch die Pfeile entlang der Übertragungskanäle 5 bzw. 6₁..ₙ angedeutet, erfolgt das Streamen der Video- und Audiodaten lediglich in eine Richtung, sodass im in Fig.1 dargestellten ersten Betriebsmodus des Server-Rechners 1 Rückfragen durch die Gruppenteilnehmer während des Vortrags des Master-Teilnehmers nicht möglich sind.

Wie dies in Fig.2 dargestellt ist, kann im ersten Betriebsmodus zusätzlich vorgesehen sein, dass von den Teilnehmer-Kommunikationseinheiten 4_{1··n} jeweils ein Miniaturbild des Gruppenteilnehmers aufgenommen und wie mit 7_{1··n} angedeutet an eine Additionsschaltung 8 des Server-Rechners 1 übermittelt werden, wo die einzelnen Miniaturbilder zu einem Mosaikbild 9 zusammengesetzt werden, welches vom Streaming-Server 2 an die Master-Kommunikationseinheit 3 übermittelt und dort angezeigt wird. Dabei ist ersichtlich, dass die Übermittlung der Miniaturbilder jeweils über einen vom Streaming-Kanal 6_{1··n} gesonderten Kanal 7_{1··n} erfolgt und dass die Übermittlung des Mosaikbilds 9 an die Master-Kommunikationseinheit 3 über einen vom Kanal 5 gesonderten Kanal 10 erfolgt. Die Miniaturbilder können dabei in regelmäßigen Abständen von den Teilnehmer-Kommunikationseinheiten 4_{1··n} aufgenommen werden, sodass auch das Mosaikbild 9 regelmäßig erneuert wird ("refresh"). Die Erneuerungsrate kann entsprechend der zur Verfügung stehenden Übertragungsbandbreite gewählt werden., z.B. ist eine Erneuerungsrate von einmal pro Sekunde denkbar.

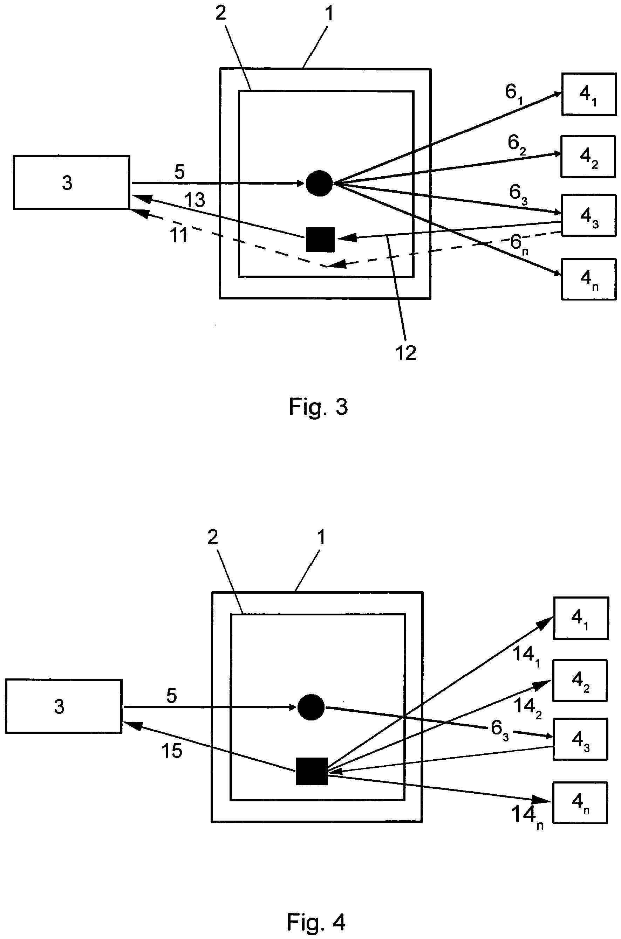

In Fig.3 ist dargestellt, wie eine Rückfrage durch einen Gruppenteilnehmer an den Master-Teilnehmer während des Vortrages eingeleitet werden kann. Der anfragende Gruppenteilnehmer sendet hierbei eine Anfrage an den Server-Rechner 1, wie dies durch die strichlierte Linie 11 angedeutet ist. Die Anfrage wird an die Master-Kommunikationseinheit 3 weitergeleitet und dort dem Master-Teilnehmer signalisiert. Wenn der Master-Teilnehmer die Anfrage akzeptiert, wird nun ein Vorschaumodus aktiviert, in dem die von der Teilnehmer-Kommunikationseinheit 3 aufgenommenen Inhalte über den Kanal 12 an den Server-Rechner 1 und von diesem über den Kanal 13 an die Master-Kommunikationseinheit 3 weitergestreamt werden. Auf diese Art und Weise kann sich der Master-Teilnehmer von dem anfragenden Gruppenteilnehmer einen Stream holen und diesen kontaktieren, ohne dass dies die anderen Gruppenteilnehmer mitbekommen. Mit dem anfragenden Gruppenteilnehmer kann hierdurch eine bidirektionale Kommunikation aufgenommen werden, bevor dem anfragenden Gruppenteilnehmer durch Wechsel in den zweiten Betriebsmodus das Wort erteilt wird.

In Fig.4 ist der angesprochene zweite Betriebsmodus erläutert, wobei ersichtlich ist, dass nun die vom anfragenden Gruppenteilnehmer (Teilnehmer-Kommunikationseinheit 4₃) aufgenommenen Inhalte an den Server-Rechner 1 übermittelt und von diesem einerseits an die Master-Kommunikationseinheit 3 und andererseits an alle übrigen Teilnehmer-Kommunikationseinheiten 4₁, 4₂, 4ₙ gestreamt werden. Auf diese Art und Weise übernimmt der Gruppenteilnehmer (Teilnehmer-Kommunikationseinheit 4₃) die Rolle des Vortragenden. Das Streaming erfolgt hierbei über die Kanäle 14_{1··n} und 15. Gleichzeitig werden die von der Master-Kommunikationseinheit 3 aufgenommenen Inhalte über die gesonderten Kanäle 5 und 6₃ an die Teilnehmer-Kommunikationseinheit 4₃ gestreamt.

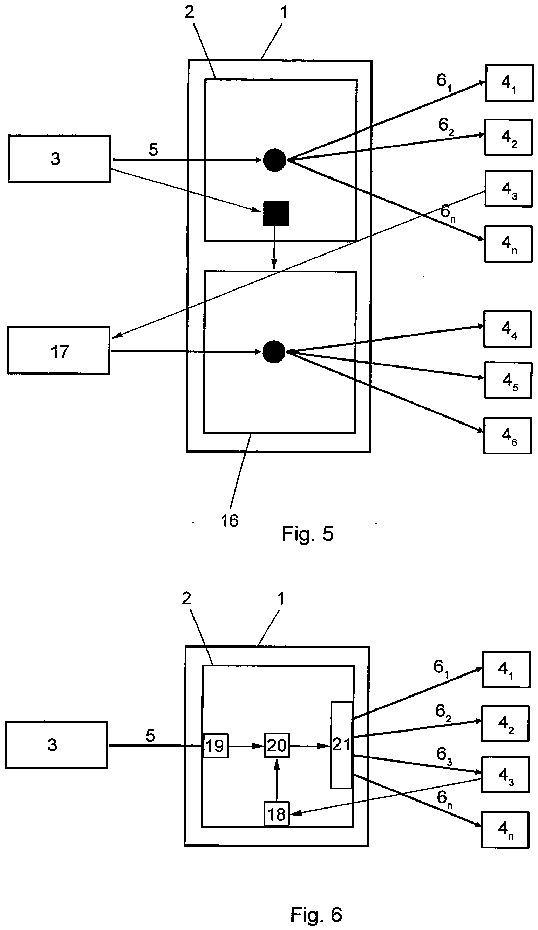

Anstatt dem anfragenden Gruppenteilnehmer das Wort zu erteilen kann der Master-Teilnehmer dem anfragenden Gruppenteilnehmer die Rolle eines Submasters zuteilen. Dies ist in Fig.5 dargestellt. Es ist ersichtlich, dass auf dem Server-Rechner 1 ein zweiter Konferenzraum 16 erstellt wurde, bei dem der ursprüngliche Gruppenteilnehmer mit der Teilnehmer-Kommunikationseinheit 4₃ die Rolle des Master-Teilnehmers übernommen hat, wodurch die Teilnehmer-Kommunikationseinheit 4₃ zur Master-Kommunikationseinheit 17 geworden ist. Dem neuen Konferenzraum 16 sind vom ursprünglichen Master-Teilnehmer eine Mehrzahl von Gruppenteilnehmern 4₄, 4₅ und 4₆ zugewiesen worden. Im Rahmen des neuen Konferenzraums 16 hat der neue Submaster 17 dieselben Befugnisse wie der Master-Teilnehmer 3 in Bezug auf den Konferenzraum 2 und kann somit einzelnen Gruppenteilnehmern das Wort erteilen und wieder entziehen.

In Fig.6 ist eine Alternative zur Vorgehensweise gemäß Fig.5 dargestellt. Der von der Gruppenkommunikationseinheit 4₃ ausgesendete Stream wird nun einer Decodierschaltung 18 zugeführt. In gleicher Weise wird der von der Master-Kommunikationseinheit 3 ausgesandte Stream einer Decodierschaltung 19 zugeführt. Die decodierten Streams werden einer Additionsschaltung 20 zugeführt, welche die beiden decodierten Streams zu einem neuen Stream zusammensetzt. Der neue Stream wird in der Folge in der Codierschaltung 21 codiert und in der Folge an die Teilnehmer-Kommunikationseinheiten 4₁..ₙ ausgesendet, sodass die Gruppenteilnehmer nicht nur den das Wort übernehmenden Gruppenteilnehmer sondern gleichzeitig auch den Master-Teilnehmer sehen und hören können.

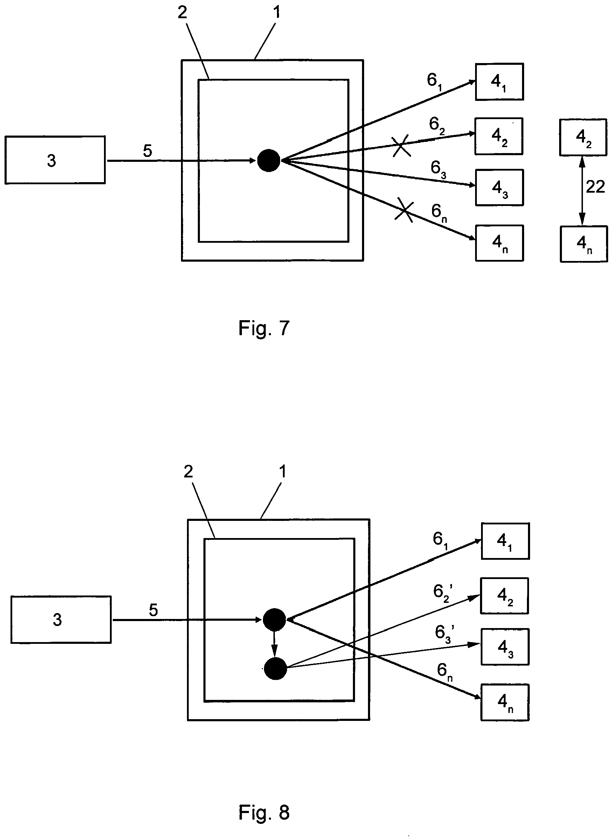

In der Darstellung gemäß Fig.7 ist der erste Betriebsmodus dargestellt und es ist ersichtlich, dass der Stream über die Kanäle 6₂ und 6ₙ unterbrochen wird, wenn zwischen den Teilnehmer-Kommunikationseinheiten 4₂ und 4ₙ über einen direkten Kanal 22 ein Einzelgespräch gestreamt wird. Der direkte Kanal 22 für ein Einzelgespräch kann aus verbindungstechnischen Gründen auch über einen Streaming-Server geführt werden.

In Fig.8 schließlich ist eine abgewandelte Ausführung des ersten Betriebsmodus dargestellt, bei welcher der Streaming-Server 2 Streams desselben Inhaltes für unterschiedliche Bandbreiten zur Verfügung stellen kann. So ist ersichtlich, dass bei dem in Fig.8 dargestellten Beispiel die Teilnehmer-Kommunikationseinheiten 4₁ und 4ₙ mit einem Stream für eine erste Bandbreite und die Teilnehmer-Kommunikationseinheiten 4₂ und 4₃ mit einem Stream für eine zweite Bandbreite versorgt werden.

## Patentansprüche

1. Verfahren zur audio- und videobasierten Echtzeit-Kommunikation zwischen wenigstens einem Master-Teilnehmer und einer Vielzahl von Gruppenteilnehmern, wobei
- zwischen einer beim Master-Teilnehmer angeordneten Master-Kommunikationseinheit und einem Server-Rechner eine Datenverbindung aufgebaut wird, über welche die von der Master-Kommunikationseinheit aufgenommenen Inhalte über wenigstens einen Kanal als Video- und Audiodaten an den Server-Rechner in Echtzeit gestreamt werden,
- am Server-Rechner ein Streaming-Server betrieben wird,
- zwischen den bei den Gruppenteilnehmern angeordneten Teilnehmer-Kommunikationseinheiten und dem Server-Rechner jeweils eine Datenverbindung aufgebaut wird,
wobei der Server-Rechner bei einer entsprechenden Anfrage zwischen einem ersten und einem zweiten Betriebsmodus wechselt, wobei
- im ersten Betriebsmodus dem Streaming-Server die von der Master-Kommunikationseinheit aufgenommenen Inhalte zugeführt sind, der Streaming-Server die ihm zugeführten Inhalte in Echtzeit über wenigstens einen Kanal der Datenverbindung an die Gruppenteilnehmer streamt, sodass lediglich eine unidirektionale Kommunikation stattfindet,
- im zweiten Betriebsmodus der Master-Teilnehmer einen Rückkanal von einem anfragenden oder ausgewählten Gruppenteilnehmer zum Server-Rechner freigibt, sodass die von der beim anfragenden oder ausgewählten Gruppenteilnehmer angeordneten Teilnehmer-Kommunikationseinheit aufgenommenen Inhalte als Video- und Audiodaten über wenigstens einen Kanal an den Server-Rechner in Echtzeit gestreamt und dem Streaming-Server zugeführt werden und der Streaming-Server die ihm zugeführten Audio- und Videodaten in Echtzeit über wenigstens einen Kanal der Datenverbindung an die übrigen Gruppenteilnehmer und den Master-Teilnehmer streamt.

2. Verfahren nach Anspruch 1, **dadurch gekennzeichnet, dass** dem Streaming-Server im zweiten Betriebsmodus zusätzlich die von der Master-Kommunikationseinheit aufgenommenen Inhalte in Echtzeit zugeführt werden und der Streaming-Server die von der Master-Kommunikationseinheit zugeführten Inhalte in Echtzeit über wenigstens einen weiteren Kanal an den anfragenden oder ausgewählten Gruppenteilnehmer streamt.

3. Verfahren nach Anspruch 1, **dadurch gekennzeichnet, dass** im zweiten Betriebsmodus die von dem anfragenden oder ausgewählten Gruppenteilnehmer an den Server-Rechner übermittelten Audio- und Videodaten im Server-Rechner decodiert werden, dass zusätzlich von der Master-Kommunikationseinheit aufgenommene Video- und Audioinhalte an den Server-Rechner gestreamt werden und dort decodiert werden, dass aus den beiden decodierten Streams im Server-Rechner in Echtzeit ein zusammengesetzter Stream erzeugt wird und dass der zusammengesetzte Stream codiert und an die Teilnehmer-Kommunikationseinheiten gestreamt wird.

4. Verfahren nach einem der Ansprüche 1 bis 3, **dadurch gekennzeichnet, dass** das Wechseln vom ersten Betriebsmodus in den zweiten Betriebsmodus auf Anfrage eines Gruppenteilnehmers an den Master-Teilnehmer erfolgt.

5. Verfahren nach Anspruch 4, **dadurch gekennzeichnet, dass** die Anfrage eines Gruppenteilnehmers an den Master-Teilnehmer das Versenden einer Anfragemitteilung vom anfragenden Gruppen-Teilnehmer über den Server-Rechner an den Master-Teilnehmer umfasst, dass die Anfrage an der Master-Kommunikationseinheit dem Master-Teilnehmer signalisiert wird und dass bei Aktivieren eines Vorschau-Modus durch den Master-Teilnehmer die von der anfragenden Teilnehmer-Kommunikationseinheit aufgenommenen Video-Inhalte und ggf. Audio-Inhalte in Echtzeit an den Server-Rechner übermittelt und vom Streaming-Server in Echtzeit ausschließlich an die Master-Kommunikationseinheit gestreamt werden.

6. Verfahren nach einem der Ansprüche 1 bis 5, **dadurch gekennzeichnet, dass** der Server-Rechner im ersten Betriebsmodus zusätzlich eine Mehrzahl von von den Teilnehmer-Kommunikationseinheiten aufgenommenen und übermittelten Video-Inhalten oder Fotos zu einem Mosaikbild zusammensetzt und der Streaming-Server das Mosaikbild an die Master-Kommunikationseinheit streamt, sodass das Mosaikbild auf der Anzeigevorrichtung der Master-Kommunikationseinheit angezeigt wird.

7. Verfahren nach einem der Ansprüche 1 bis 6, **dadurch gekennzeichnet, dass** bei der Master-Kommunikationseinheit und ggf. den Teilnehmer-Kommunikationseinheiten zwei Videokameras eingesetzt werden, deren Inhalte über voneinander gesonderte Kanäle an den Server-Rechner übertragen und vom Streaming-Server über voneinander gesonderte Kanäle gestreamt werden.

8. Verfahren nach einem der Ansprüche 1 bis 7, **dadurch gekennzeichnet, dass** die Herstellung einer Datenverbindung zwischen einer Teilnehmer-Kommunikationseinheit und dem Server-Rechner das Übermitteln einer Benutzerkennung des Gruppenteilnehmers an den Server-Rechner und das Authentifizieren des Gruppenteilnehmers umfasst.

9. Verfahren nach einem der Ansprüche 1 bis 8, **dadurch gekennzeichnet, dass** der Empfang des vom Streaming-Server ausgesendeten Streams durch Teilnehmer-Kommunikationseinheiten unterbrochen wird, die eine direkte Streaming-Verbindung zwischen sich herstellen.

10. Server-Rechner insbesondere zur Durchführung des Verfahrens nach einem der Ansprüche 1 bis 9, mit einem Streaming-Server, wobei der Server-Rechner wenigstens eine Schnittstelle zum Empfangen und/oder Senden eines Streams von bzw. zu einer Master-Kommunikationseinheit und wenigstens eine Schnittstelle zum Empfangen und/oder Senden eines Streams zu bzw. von einer Vielzahl von Teilnehmer-Kommunikationseinheiten umfasst, wobei der Server-Rechner Verarbeitungsmittel aufweist, um bei einer entsprechenden Anfrage zwischen einem ersten und einem zweiten Betriebsmodus zu wechseln, wobei
- im ersten Betriebsmodus der Streaming-Server die ihm von der Master-Kommunikationseinheit zugeführten Audio- und Videodaten in Echtzeit über wenigstens einen Kanal an die Gruppenteilnehmer streamt, sodass lediglich eine unidirektionale Kommunikation stattfindet,
- im zweiten Betriebsmodus der Master-Teilnehmer einen Rückkanal von einem anfragenden oder ausgewählten Gruppenteilnehmer zum Server-Rechner freigibt, sodass die von der beim anfragenden oder ausgewählten Gruppenteilnehmer angeordneten Teilnehmer-Kommunikationseinheit aufgenommenen und dem Server-Rechner über wenigstens einen Kanal als Audio- und Videodaten in Echtzeit übermittelten Inhalte dem Streaming-Server zugeführt werden und der Streaming-Server die ihm zugeführten Audio- und Videodaten in Echtzeit über wenigstens einen Kanal an die übrigen Gruppenteilnehmer und den Master-Teilnehmer streamt.

11. Server-Rechner nach Anspruch 10, **dadurch gekennzeichnet, dass** die Verarbeitungsmittel derart ausgebildet sind, dass der Streaming-Server im zweiten Betriebsmodus zusätzlich die ihm von der Master-Kommunikationseinheit zugeführten Audio- und Videodaten in Echtzeit über wenigstens einen weiteren Kanal an den anfragenden oder ausgewählten Gruppenteilnehmer streamt.

12. Server-Rechner nach Anspruch 10, **dadurch gekennzeichnet, dass** die Verarbeitungsmittel derart ausgebildet sind, dass im zweiten Betriebsmodus die von dem anfragenden oder ausgewählten Gruppenteilnehmer an den Server-Rechner übermittelten Audio- und Videodaten im Server-Rechner mittels einer Decodierschaltung decodiert werden, dass zusätzlich von der Master-Kommunikationseinheit aufgenommene und an den Server-Rechner übermittelte Video- und Audioinhalte dort mittels einer Decodierschaltung dekodiert werden, dass aus den beiden dekodierten Streams im Server-Rechner in Echtzeit mittels einer Additionsschaltung ein zusammengesetzter Stream erzeugt wird und dass der zusammengesetzte Stream mittels einer Codierschaltung codiert und an die Teilnehmer-Kommunikationseinheiten gestreamt wird.

13. Server-Rechner nach einem der Ansprüche 10 bis 12, **dadurch gekennzeichnet, dass** die Verarbeitungsmittel derart ausgebildet sind, dass das Wechseln vom ersten Betriebsmodus in den zweiten Betriebsmodus auf Anfrage eines Gruppenteilnehmers an den Master-Teilnehmer oder durch Zuteilung durch den Master-Teilnehmer erfolgt.

14. Server-Rechner nach Anspruch 13, **dadurch gekennzeichnet, dass** die Verarbeitungsmittel derart ausgebildet sind, dass die Anfrage eines Gruppenteilnehmers an den Master-Teilnehmer das Versenden einer vom anfragenden Gruppen-Teilnehmer erhaltenen Anfragemitteilung an den Master-Teilnehmer umfasst und dass bei Aktivieren eines Vorschau-Modus durch den Master-Teilnehmer die von der anfragenden Teilnehmer-Kommunikationseinheit aufgenommenen und in Echtzeit an den Server-Rechner übermittelten Video-Inhalte und ggf. Audio-Inhalte vom Streaming-Server in Echtzeit ausschließlich an die Master-Kommunikationseinheit gestreamt werden.

15. Server-Rechner nach einem der Ansprüche 10 bis 14, **dadurch gekennzeichnet, dass** die Verarbeitungsmittel derart ausgebildet sind, dass der Server-Rechner im ersten Betriebsmodus zusätzlich eine Mehrzahl von von den Teilnehmer-Kommunikationseinheiten aufgenommenen und übermittelten Video-Inhalten mittels einer Additionsschaltung zu einem Mosaikbild zusammensetzt und das Mosaikbild an die Master-Kommunikationseinheit streamt.

16. Server-Rechner nach einem der Ansprüche 10 bis 15, **dadurch gekennzeichnet, dass** die Verarbeitungsmittel derart ausgebildet sind, dass von der Master-Kommunikationseinheit und ggf. den Teilnehmer-Kommunikationseinheiten mittels zweier Videokameras aufgenommene und über voneinander gesonderte Kanäle an den Server-Rechner übertragene Inhalte vom Streaming-Server über voneinander gesonderte Kanäle gestreamt werden.

17. Server-Rechner nach einem der Ansprüche 10 bis 16, **dadurch gekennzeichnet, dass** die Verarbeitungsmittel derart ausgebildet sind, dass die Herstellung einer Datenverbindung zwischen einer Teilnehmer-Kommunikationseinheit und dem Server-Rechner das Empfangen einer Benutzerkennung des Gruppenteilnehmers und das Authentifizieren des Gruppenteilnehmers umfasst.

18. Server-Rechner nach einem der Ansprüche 10 bis 17, **dadurch gekennzeichnet, dass** die Verarbeitungsmittel derart ausgebildet sind, dass das Aussenden von Streams durch den Streaming-Server an Teilnehmer-Kommunikationseinheiten unterbrochen wird, die eine direkte Streaming-Verbindung zwischen sich herstellen.

19. Vorrichtung zur audio- und videobasierten Echtzeit-Kommunikation zwischen wenigstens einem Master-Teilnehmer und einer Vielzahl von Gruppenteilnehmern, umfassend einen Server-Rechner nach einem der Ansprüche 10 bis 18, wenigstens eine Master-Kommunikationseinheit und wenigstens eine Teilnehmer-Kommunikationseinheit.
